Europäisches Patentamt

European Patent Office

Office européen des brevets

(19)

(11)  EP 0 749 234 B1

(12)  **FASCICULE DE BREVET EUROPEEN**

(45)  Date de publication et mention
de la délivrance du brevet:
**26.04.2000  Bulletin 2000/17**

(51)  Int Cl.[7]: **H04N 3/15**, H04N 5/235

(21)  Numéro de dépôt: **96401294.2**

(22)  Date de dépôt: **13.06.1996**

(54)  **Capteur d'image à semi-conducteur à transformation intégrée d'histogramme de pixels**

Halbleiter-Bildsensor mit integrierte Pixelhistogrammumwandlung

Semiconductor image sensor with integrated pixel histogram conversion

(84)  Etats contractants désignés:
**DE GB IT**

(30)  Priorité:  **16.06.1995  FR 9507202**

(43)  Date de publication de la demande:
**18.12.1996  Bulletin 1996/51**

(73)  Titulaires:
  • **FRANCE TELECOM**
**75015 Paris (FR)**
  • **CENTRE NATIONAL DE
LA RECHERCHE SCIENTIFIQUE
75794 Paris Cédex 16 (FR)**

(72)  Inventeurs:
  • **Ni, Yang
91940 Les Ulis (FR)**
  • **Devos, Francis
91620 La Ville du Bois (FR)**

(74)  Mandataire: **Martin, Jean-Jacques et al
Cabinet REGIMBEAU
26, Avenue Kléber
75116 Paris (FR)**

(56)  Documents cités:
**WO-A-91/05989**

  • **PROCEEDINGS OF THE CUSTOM INTEGRATED
CIRCUITS CONFERENCE, BOSTON, MAY 13 - 16,
1990, no. CONF. 12, 13 Mai 1990, INSTITUTE OF
ELECTRICAL AND ELECTRONICS ENGINEERS,
pages 711-716, XP000167814 CARLEY L R ET
AL: "INTEGRATED SENSOR AND
RANGEFINDING ANALOG SIGNAL
PROCESSOR"**
  • **PATENT ABSTRACTS OF JAPAN vol. 016, no.
179 (P-1345), 28 Avril 1992 & JP-A-04 020944
(FUJI PHOTO FILM CO LTD), 24 Janvier 1992,**

**Description**

La présente invention concerne d'une façon générale les capteurs d'image ou imageurs à circuit intégré notamment de type MOS (Métal-Oxyde-Semiconducteur), et plus précisément un tel imageur pourvu de moyens de traitement d'image à transformation d'histogramme de pixels.

La transformation d'histogramme de pixels est une opération bien connue en traitement numérique d'images. Plus précisément, si l'on considère, dans une image en noir et blanc comportant N pixels pouvant chacun prendre M valeurs différentes (ou M "niveaux de gris"), par exemple 256 valeurs pour un codage de chaque pixel sur huit bits, on peut réaliser un histogramme qui, pour chaque valeur que peut prendre un pixel, indique le nombre de pixels de l'image ayant effectivement cette valeur.

Un tel histogramme est bien représentatif de la qualité de l'image, ou de ses défauts. Ainsi, une image dont l'histogramme est décalé vers le noir est sous-exposée, tandis qu'une image dont l'histogramme est décalé vers le blanc est sur-exposée. En outre, une image dont l'histogramme est étroit manque de contraste.

Une transformation d'histogramme consiste a appliquer à l'histogramme d'une image acquise une fonction non linéaire destinée à rééquilibrer les différentes valeurs de pixels de l'image, pour obtenir une image transformée de meilleure qualité. Dans un cas particulier, dit "égalisation" d'histogramme, on cherche à obtenir un nouvel histogramme qui couvre l'intégralité de la gamme de valeurs de pixels possibles, avec une répartition aussi équilibrée que possible entre les différentes valeurs (histogramme plat). On obtient alors une image optimale en matière de luminosité et de contraste.

D'une façon générale, on appelle HI(r) l'histogramme d'une image initiale Ii et HT(z) l'histogramme de l'image It que l'on cherche à obtenir. Le but est de définir $z = C(r)$, la fonction qui permet d'obtenir HT(z) à partir de HT(r).

La procédure pour cette transformation d'histogramme comprend les trois phases suivantes :

a) calcul de l'histogramme cumulé de l'image Ii :

$$HIC(r) = \int HI(r)dr$$

b) calcul de l'histogramme cumulé de l'image It :

$$HTC(z) = \int HT(z)dz$$

c) calcul de la fonction :

$$z = C(r) = HTC^{-1}[HIC(r)]$$

Généralement, la fonction HT(z) est une fonction recherchée connue, ce qui permet de connaître la fonction HTC-1. Le point clé de cette procédure est donc de calculer l'histogramme cumulé de l'image initiale, soit HIC(r).

Dans le cas particulier de l'égalisation d'histogramme, l'histogramme recherché est plat, ce qui s'exprime par HT(z) = k (constante).

Il en résulte que :

$$HTC(z) : kz$$

et

$$HTC^{-1}[HIC(r)] = HIC(r)/k$$

Par ailleurs, les imageurs à semiconducteurs traditionnels (CCD) ne peuvent opérer que dans une gamme de luminosité bien définie, et l'exposition correcte doit toujours faire intervenir un dispositif à diaphragme ou analogue, dont les temps de réaction sont relativement longs.

En particulier, si un capteur CCD vient à saturer, il faut laisser au dispositif à diaphragme le temps de réagir et, dans l'intervalle, une partie substantielle de l'information d'image est irrémédiablement perdue (c'est-à-dire qu'une proportion importante de pixels sont à leur niveau maximal) et une rectification notable de celle-ci par transformation d'histogramme par traitement numérique n'est pas possible. Le même inconvénient existe si une image se trouve sous-exposée.

La présente invention se propose de pallier ces limitations de l'état de la technique et de proposer, dans le cadre d'un imageur intégré de type MOS, une transformation d'histogramme en temps réel qui, quelles que soient les conditions d'exposition, permette de récupérer et de traiter l'information sensiblement pour l'ensemble des pixels.

Un autre objet important de la présente l'invention est, grâce à cette caractéristique, de réaliser un imageur dans lequel les moyens de commande d'exposition tels que diaphragme variable sont superflus.

Ainsi la présence invention concerne un capteur d'image à semi-conducteurs, du type comprenant un ensemble de cellules comprenant chacune un élément semi-conducteur photosensible capable de générer un premier paramètre électrique dont la valeur évolue de façon monotone avec la quantité de lumière reçue pendant un cycle donné par ladite cellule, et

un moyen comparateur apte à comparer au cours du cycle ledit paramètre électrique avec une valeur de seuil commune à toutes les cellules, caractérisé en ce qu'il comprend en outre, dans chaque cellule : un moyen générateur commandé par la sortie du moyen comparateur pour faire varier un second paramètre électrique sur une première ligne commune à toute les cellules d'une valeur constante prédéterminée lorsque ledit premier paramètre a franchi ledit seuil,

un moyen échantillonneur commandé également par la sortie dudit moyen comparateur pour enregistrer dans ladite cellule la valeur instantanée d'un troisième paramètre électrique présent sur une seconde ligne commune sensiblement lorsque ledit premier paramètre a franchi ledit seuil,

et en ce que le capteur comprend en outre :

un circuit pour effectuer une conversion non linéaire de l'évolution du second paramètre électrique en fonction du temps en une évolution du troisième paramètre électrique en fonction du temps, et

des moyens de lecture des valeurs instantanées ou troisième paramètre électrique enregistrées dans les diverses cellules en fin de cycle, lesdites valeurs lues pour les différentes cellules constituant l'image.

De façon avantageuse, l'élément semi-conducteur photosensible de chaque cellule consiste en une photodiode et il est prévu des moyens pour précharger les photodiodes des diverses cellules, le premier paramètre électrique étant alors la tension électrique aux bornes de la photodiode, comparée par le moyen comparateur à une tension de seuil.

De façon préférée, le moyen générateur comprend un générateur de courant constant, ladite première ligne commune étant reliée aux générateurs des différentes cellules et ledit second paramètre étant le courant cumulé dans la ligne.

Avantageusement, le troisième paramètre est une tension électrique, et le moyen échantillonneur comprend un condensateur et interrupteur commandé par le moyen comparateur et apte à sélectivement appliquer la tension instantanée présente sur la seconde ligne commune audit condensateur.

Dans une variante de réalisation, le moyen générateur et le moyen échantillonneur sont commandés par la sortie du moyen comparateur à des instants légèrement différents.

L'invention exposée ci-dessus est particulièrement avantageuse lorsque les éléments photosensibles, les moyens comparateurs, les moyens générateurs, les moyens échantillonneurs et les moyens de lecture des différentes cellules sont réalisés en technologie Métal-Oxyde-Semiconducteur sur un substrat commun.

D'autres aspects, buts et avantages de la présente invention apparaîtront mieux à la lecture de la description détaillée suivante d'une forme de réalisation préférée de celle-ci, donnée à titre d'exemple non limitatif et faite en référence aux dessins annexés, sur lesquels :

la figure 1 est une représentation schématique d'un imageur MOS de la technique connue,

la figure 2 représente schématiquement le circuit d'une cellule individuelle d'un imageur MOS à transformation d'histogramme selon la présente invention,

la figure 3 représente la structure électrique de la cellule de la figure 2,

la figure 4 représente le cycle de fonctionnement de l'imageur des figures 2 et 3, et

la figure 5 illustre schématiquement la structure générale de l'ensemble d'un imageur MOS à transformation d'histogramme selon la présente invention.

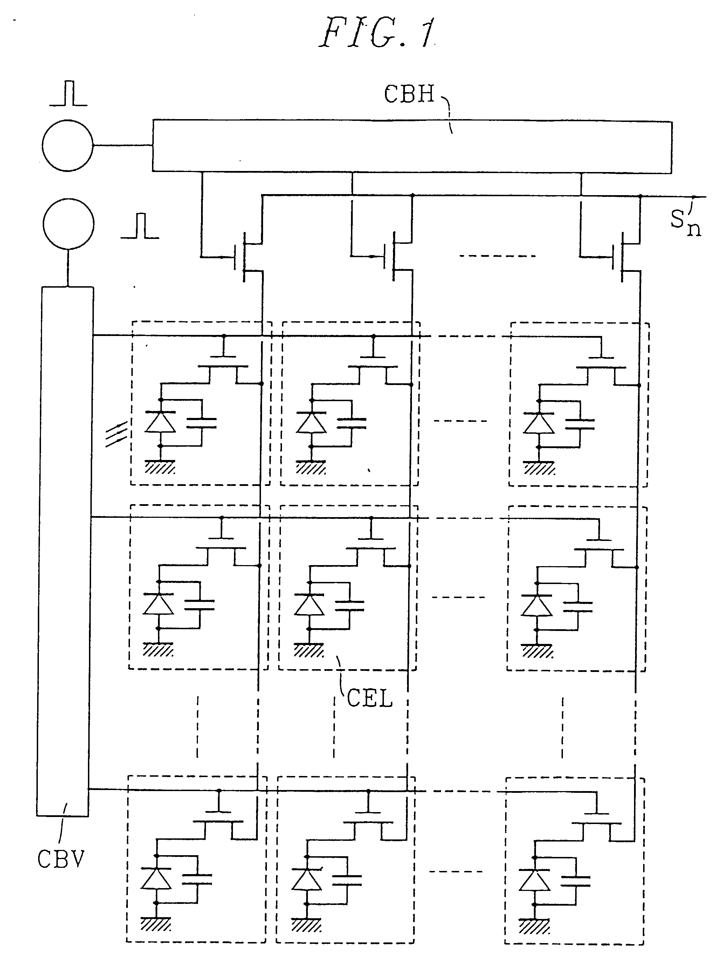

En référence tout d'abord à la figure 1, on a représenté un imageur intégré à circuit MOS connu, constitué par un dispositif matriciel d'acquisition d'image qui utilise des photodiodes et des transistors MOS pour réaliser un capteur opto-électronique. Il est constitué principalement d'un ensemble de cellules CEL disposées en rangées et colonnes, d'un circuit de balayage horizontal CBH et d'un circuit de balayage vertical CBV.

On observera ici que la différence principale entre un tel imageur et une autre catégorie de capteur à semi-conducteurs, à savoir un dispositif à couplage de charges dit "CCD", réside dans le processus de lecture de l'image. Ainsi, alors qu'un capteur "CCD" utilise des registres à décalage analogiques basés sur un principe de transfert direct de charges entre capacités réalisées en technologie MOS et juxtaposées, un imageur MOS utilise un transfert de charges indirect, c'est-à-dire s'effectuant par l'intermédiaire d'interrupteurs formés de transistors MOS.

Comme on le verra en détail plus loin, la compatibilité naturelle entre la structure d'un imageur MOS et celle des circuits électroniques analogiques/numériques réalisés en technologie CMOS permet d'intégrer les fonctions de traitement de l'image acquise, conformes à la présente invention, sur le même substrat que le capteur proprement-dit.

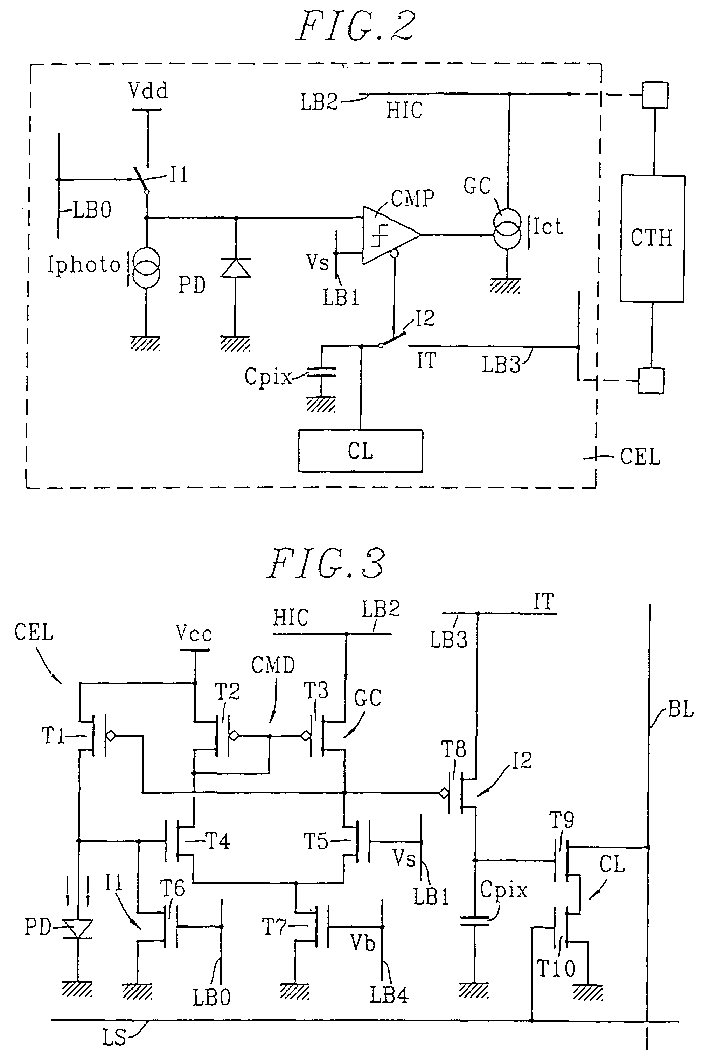

Maintenant en référence à la figure 2, on a représenté le circuit d'une cellule individuelle CEL d'un imageur MOS à transformation d'histogramme intégrée selon l'invention, qui comprend tout d'abord une photodiode PD fonctionnant en mode d'intégration par le jeu de sa capacité intrinsèque.

Selon le mode de réalisation concret, la tension aux bornes de la photodiode soit croît, soit décroît en fonction de la quantité de lumière qu'elle reçoit.

Dans le présent exemple, cette photodiode est branchée entre une tension d'alimentation continue Vdd et la masse via un interrupteur MOS, noté I1, qui permet d'assurer périodiquement, sous la commande d'une ligne de bus de commande notée LB0, la pré-charge de la photodiode. Après cette précharge, la tension aux bornes de la photodiode décroît à une vitesse d'autant plus rapide que la quantité de lumière reçue est importante.

La tension aux bornes de la photodiode PD est appliquée à une première entrée d'un comparateur à seuil CMP, dont la seconde entrée reçoit une tension de seuil Vs présente sur une ligne de bus LB1 de tension de seuil.

La sortie du comparateur CMP est au niveau logique "1" lorsque la tension décroissante aux bornes de la photodiode est descendue en deçà de la tension Vs.

La sortie du comparateur est reliée à une entrée de commande d'un générateur de courant constant GC qui est relié entre une ligne de bus de courant d'histogramme cumulé HIC de l'image acquise, notée LB2 et la masse.

Ainsi, le franchissement du seuil Vs par la tension de photodiode provoque l'injection dans la ligne LB2 d'un courant constant noté Ict.

Le comparateur CMP dispose également d'une sortie complémentaire, dont la valeur logique est inverse de celle de la sortie précitée, qui commande un circuit d'échantillonnage composé par un interrupteur I2 commandé par ladite sortie complémentaire et par un condensateur Cpix relié entre l'interrupteur et la masse, l'autre borne de l'interrupteur étant reliée à une ligne de bus LB3 véhiculant une tension d'histogramme cumulée transformée, notée IT.

On observe qu'à l'extérieur de la cellule CEL, et de façon commune pour toutes les cellules, l'imageur comporte un circuit CTH de transformation d'histogramme cumulé qui reçoit en entrée la valeur instantanée du courant HIC sur la ligne de bus LB2, qui si nécessaire convertit ce courant en tension, qui applique à toute valeur instantanée reçue la transformation requise (qui peut être ou non une égalisation), et qui délivre en sortie, sur la ligne de bus LB3, la tension d'histogramme cumulé après transformation.

Sur la borne haute du condensateur Cpix est prélevée, par un circuit de lecture CL approprié, la tension aux bornes de Cpix à des instants prédéterminés.

Le fonctionnement de la cellule décrite ci-dessus va maintenant être expliqué.

L'acquisition du pixel de l'image correspondant à la cellule considérée est effectuée en préchargeant tout d'abord, par fermeture de l'interrupteur I1, la photodiode à une tension donnée, en l'occurrence Vdd.

Lorsque l'interrupteur I1 est ouvert, la tension aux bornes de la photodiode décroît à une vitesse qui est fonction de la quantité de lumière qu'elle reçoit. On comprend donc que le basculement du comparateur CMP s'effectue d'autant plus rapidement que la quantité de lumière reçue est importante.

Si l'on note Vinit la tension de précharge de la photodiode PD, on comprend que le temps T qui s'écoule entre le début de la décharge et le basculement du comparateur sera, en supposant que la décharge s'effectue de façon linéaire :

$$T = (Vinit - Vs) \times Cdiode / Iphoto$$

où Cdiode est la capacité de la photodiode,
Iphoto est le courant de décharge d'origine photonique soit :

$$T = K / Iphoto$$

Le courant Iphoto étant proportionnel au flux optique, T est donc inversement proportionnel à ce flux et, si T représente la variable de sortie, la fonction de conversion photoélectrique T = f(flux) est une fonction du type $x^{-1}$, fonction non linéaire mais monotone.

L'instant du basculement du comparateur CMP dépend donc uniquement de la quantité de lumière reçue par la cellule.

En conséquence, tous les pixels de l'imageur ayant reçu la même quantité de lumière voient leur comparateur CMP basculer au même instant.

A la fin de la précharge (simultanée) des photodiodes, tous les pixels se trouvent à l'état logique "0", cet état logique pouvant être représenté par l'état de sortie du comparateur CMP. Dès que la précharge est supprimée, les pixels évoluent et basculent les uns après les autres à l'état logique "1".

Si l'on effectue en permanence la somme de tous ces "1" logiques, entre le premier et le dernier des basculements, on comprend aisément que l'on effectue en fait l'intégration de tous les pixels ayant basculé, et que l'on construit donc dans le temps l'histogramme cumulé de l'image initiale, noté HIC, sous la forme d'une rampe qui va prendre un profil monotone croissant plus ou moins régulier, en fonction de la régularité des basculements individuels.

On obtiendra donc, sous réserve des pixels ex-aequo (basculant exactement au même moment) dans les régions de bord de l'histogramme, un histogramme pratiquement optimal et pleine échelle, c'est-à-dire prenant en compte aussi bien les tous premiers basculements que les plus tardifs.

Les circuits de la figure 2 pour toutes les cellules permettent de réaliser cet histogramme cumulé de l'image d'entrée sur la ligne de bus LB2. Plus précisément, chaque passage d'un pixel à "1" provoque l'injection dans cette ligne d'un courant constant Ict supplémentaire, si bien que le courant global dans la ligne LB2 fournit la sommation désirée des pixels ayant basculé.

La fonction du circuit de transformation CTH de la figure 2 peut être réalisée simplement par un convertisseur courant/tension non linéaire (ou linéaire pour une simple égalisation), pour transformer le courant sur la ligne LB2 en la tension sur la ligne LB3, convenablement normalisée. La caractéristique conversion correspond en fait à la fonction inverse de la fonction HTC mentionnée plus haut, soit HTC$^{-1}$.

On obtient ainsi sur la ligne LB3 une tension représentative d'un histogramme cumulé transformé correspondant à la fonction :

$$z = HTC^{-1}[HIC(r)]$$

On observera ici que, dans le cas d'une simple égalisation, on réalise une conversion courant/tension linéaire, qui nécessite une simple résistance.

La cellule de la figure 2, à l'aide de son circuit d'échantillonnage décrit plus haut, réalise l'enregistrement de la tension présente sur la ligne LB3 à l'instant où le pixel commute, c'est-à-dire où le comparateur CMP bascule.

On comprend que cet enregistrement individuel dans chaque cellule réalise d'emblée la fonction souhaitée, c'est-à-dire la conversion in-situ de chaque valeur réelle de pixel en une valeur corrigée telle que l'ensemble des pixels correspond à l'histogramme cumulé après transformation, noté IT, présent sur la ligne LB3.

Plus précisément, dès que le comparateur CMP bascule, l'interrupteur I2 est temporairement fermé pour accumuler et conserver dans le condensateur Cpix la valeur instantanée de la tension présente sur la ligne LB3.

Or cette valeur correspond bien à la valeur que doit prendre le pixel pour satisfaire, sur l'ensemble des pixels, à l'histogramme cumulé transformé.

Ainsi l'on construit sur le substrat même de l'imageur MOS l'image corrigée, avec les conséquences suivantes :

- l'influence de la non-linéarité de la loi qui relie l'intensité lumineuse effectivement reçue par le pixel et l'instant T de basculement est annulée grâce au fait que l'instant d'échantillonnage correspond précisément à l'instant du basculement du comparateur, c'est-à-dire d'accroissement de l'histogramme cumulé avant traitement présent sur la ligne LB2,
- la lecture par les circuits CL de l'image traitée, disponible en même temps sur l'ensemble des capacités Cpix du réseau à la fin d'un cycle de fonctionnement, peut s'effectuer selon une période fixe.

La seule difficulté réside en ce que des pixels ayant reçu trop peu de lumière pour basculer au cours de la période considérée resterons vus comme noirs, même s'ils sont nombreux.

On observera par ailleurs que, selon une variante de réalisation non illustrée, on peut faire en sorte que l'instant auquel s'effectue l'enregistrement dans le circuit d'échantillonnage, par la sortie complémentaire du comparateur CMP, peut être légèrement décalé par rapport à l'instant d'injection dans la ligne LB2 du courant correspondant au basculement de la cellule considérée. Cet enregistrement peut ainsi s'effectuer légèrement plus tôt ou légèrement plus tard.

Cette solution peut être adoptée pour laisser au circuit de transformation le temps d'effectuer la transformation d'histogramme cumulé.

En référence maintenant à la figure 3, on a illustré un exemple de réalisation du circuit de la figure 2 à l'aide de transistors MOS. Les mêmes éléments que sur la figure 2 sont désignés par les mêmes signes de référence.

Les transistors T2, T3, T4, T5 et T7 consistuent à la fois le comparateur CMP et le générateur de courant constant GC, la valeur du courant étant fixée par une tension de polarisation Vb appliquée sur la grille de T7.

Le transistor T6 constitue l'interrupteur I1, tandis que le transistor T8 constitue l'interrupteur I2.

Les transistors T9 et T10 constituent le circuit de lecture de la valeur de la tension présente aux bornes de la capacité Cpix, ce circuit de lecture étant relié à un bus de lecture BL.

On a représenté en outre une ligne de sélection de ligne LS commandant le circuit de lecture.

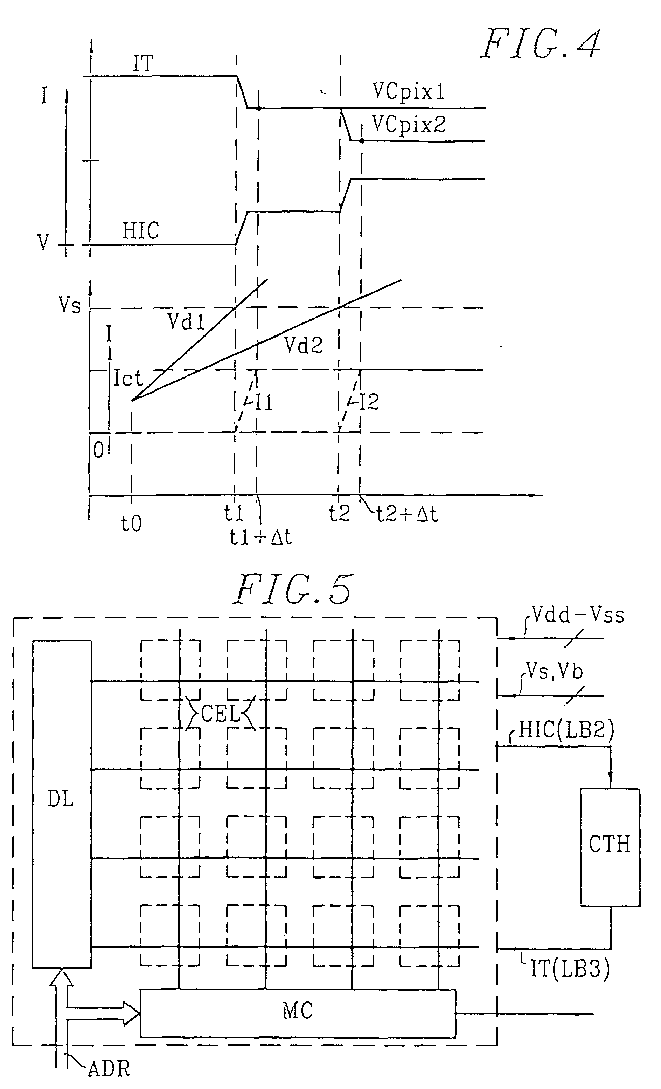

On a illustré sur la figure 4 le comportement d'un imageur selon la présente invention lorsque les comparateurs de deux cellules notées 1 et 2 basculent successivement.

(Dans cet exemple, on suppose que la réalisation est telle que l'instant d'échantillonnage de la tension IT d'histogramme cumulé après transformation est retardé d'une valeur $\Delta t$ après l'instant de basculement du comparateur. On suppose également que les photodiodes, contrairement à ce que l'on a décrit plus haut, sont telles que le courant à leurs bornes croît lorsqu'un flux lumineux leur est appliqué).

L'instant t0 est celui de la fin de la précharge simultanée de toutes les photodiodes de l'imageur (début de l'acquisition).

La tension de photodiode de la première cellule est notée Vd1. Lorsqu'elle franchit le seuil Vs (instant t1), le courant I1 appliqué à la ligne de courant HIC passe de zéro à la valeur Ict, pour accroître cette valeur le courant représentatif de l'histogramme cumulé HIC. La valeur de la tension échantillonnée sur le signal IT à l'instant t1+$\Delta t$ est notée Vcpix1.

A l'instant t2, c'est la cellule 2, qui a reçu une quantité de lumière moins important, qui commute, c'est-à-dire que la tension de photodiode Vd2 franchit le seuil Vs. Un courant I2 passant de zéro à Ict est rajouté au courant représentatif de HIC, et la tension échantillonnée sur le signal IT à l'instant t2+$\Delta t$ est noté Vcpix2.

Le processus se répète ainsi pour toutes les cellules de l'imageur.

Maintenant en référence à la figure 5, on a représenté un exemple de structure globale d'un imageur MOS selon l'invention, qui comprend un circuit principal formé sur un substrat commun et comprenant un réseau de cellules CEL conformes à la figure 2 disposées en rangées et colonnes, un circuit décodeur de ligne DL de type classique, et un multiplexeur de colonnes MC également de type classique. A l'extérieur de ce substrat est réalisé le circuit amplificateur/convertisseur de transformation d'histogramme CTH, recevant la ligne de bus LB2 acheminant le courant d'histogramme cumulé avant traitement et ré-appliquant au circuit principal la tension d'histogramme après transformation sur la ligne de bus LB3.

Au circuit principal sont également appliquées les tensions d'alimentation Vdd et Vss, la tension de seuil Vs et la tension de polarisation Vb, ainsi qu'un bus d'adresses ADR. La sortie de l'imageur s'effectue au niveau du multiplexeur de colonnes.

Bien entendu, la présente invention n'est nullement limitée aux formes de réalisation décrites et représentées, mais l'homme de l'art saura y apporter toute variante ou modification conforme à son esprit.

En particulier, bien que l'on ait décrit ci-dessus un capteur noir et blanc à niveaux de gris, il est clair que la présente invention peut être utilisée pour traiter la luminosité d'une image en couleurs.

L'invention s'applique avantageusement à tous les domaines techniques ayant recours à des capteurs d'image à semi-conducteurs (robotique et reconnaissance de formes, électronique grand-public, aide à la vision en automobile ou autre, etc...). Elle est particulièrement intéressante dans le cas où, notamment pour des raisons d'encombrement, une optique à diaphragme variable n'est pas désirable.

## Revendications

1. Capteur d'image à semi-conducteurs, du type comprenant un ensemble de cellules (CEL) comprenant chacune un élément semi-conducteur photosensible (PD) capable de générer un premier paramètre électrique dont la valeur évolue de façon monotone avec la quantité de lumière reçue pendant un cycle donné par ladite cellule, et

   un moyen comparateur (CMP) apte à comparer au cours du cycle ledit paramètre électrique avec une valeur de seuil (Vs) commune à toutes les cellules, caractérisé en ce qu'il comprend en outre, dans chaque cellule :

   un moyen générateur (GC) commandé par la sortie du moyen comparateur pour faire varier un second paramètre électrique (HIC) sur une première ligne (LB2) commune à toute les cellules d'une valeur constante prédéterminée (Ict) lorsque ledit premier paramètre a franchi ledit seuil,
   un moyen échantillonneur (I2, Cpix) commandé également par la sortie dudit moyen comparateur pour enregistrer dans ladite cellule la valeur instantanée d'un troisième paramètre électrique (IT) présent sur une seconde ligne commune (LB3) sensiblement lorsque ledit premier paramètre a franchi ledit seuil,

   et en ce que le capteur comprend en outre :

   un circuit (CTH) pour effectuer une conversion de l'évolution du second paramètre électrique (HIC) en fonction du temps en une évolution du troisième paramètre électrique (IT) en fonction du temps, et
   des moyens de lecture (CL) des valeurs instantanées du troisième paramètre électrique enregistrées dans les diverses cellules en fin de cycle.

2. Capteur selon la revendication 1, caractérisé en ce que l'élément semi-conducteur photosensible de chaque cellule consiste en une photodiode (PD), en ce qu'il est prévu des moyens (I1) pour précharger les photodiodes des diverses cellules, en ce que le premier paramètre électrique est la tension électrique aux bornes de la photodiode, comparée par le moyen comparateur (CMP) à une tension de seuil (Vs).

3. Capteur selon l'une des revendications 1 et 2, caractérisé en ce que le moyen générateur (GC) comprend un générateur de courant constant, ladite première ligne commune (LB2) étant reliée aux générateurs des différentes cellules et ledit second paramètre électrique (HIC) étant le courant cumulé dans la ligne.

4. Capteur selon l'une des revendications 1 à 3, caractérisé en ce que le troisième paramètre (IT) est une tension électrique, et en ce que le moyen échantillonneur comprend un condensateur (Cpix) et interrupteur (I2) commandé par le moyen comparateur et apte à sélectivement appliquer la tension instantanée présente sur la seconde ligne commune (LB3) audit condensateur.

5. Capteur selon l'une des revendications 1 à 4, caractérisé en ce que le moyen générateur (GC) et le moyen échantillonneur (I2, Cpix) sont commandés par la sortie du moyen comparateur (CMP) à des instants légèrement différents (t, t+Δt).

6. Capteur selon l'une des revendications 1 à 5, caractérisé en ce que les éléments photosensibles (Pd), les moyens comparateurs (CMP), les moyens générateurs (GC), les moyens échantillonneurs (I2, Cpix) et les moyens de lecture (CL) des différentes cellules sont réalisés en technologie Métal-Oxyde-Semiconducteur sur un substrat commun.

**Patentansprüche**

1. Halbleiter-Bildsensor mit einer Reihe von Zellen (CEL), die jeweils ein lichtempfindliches Halbleiterelement (PD) enthalten, welches einen ersten elektrischen Parameter erzeugen kann, dessen Wert zusammen mit der von dieser Zelle während eines bestimmten Zyklus empfangenen Lichtmenge in geordneter Folge ansteigt, sowie mit einem Komparator (CMP), der geeignet ist, im Laufe dieses Zyklus diesen elektrischen Parameter mit einem Schwellenwert (Vs) zu vergleichen, der allen Zellen gemeinsam ist, **dadurch gekennzeichnet, daß**

   er außerdem in jeder Zelle folgendes aufweist: einen Generator (GC), welcher durch den Ausgang des Komparators gesteuert wird, um einen zweiten elektrischen Parameter (HIC) auf einer ersten Leitung (LB2), die alle Zellen gemeinsam haben, um einen bestimmten konstanten Wert (Ict) zu verändern, wenn der erste Parameter diesen Schwellenwert überschritten hat,
   Einen Probenehmer (I2, Cpix), welcher ebenfalls von dem Ausgang des Komparators gesteuert wird, um in der Zelle den momentanen Wert eines dritten elektrischen Parameters (IT), der auf einer zweiten gemeinsamen Leitung (LB3) vorhanden ist, im wesentlichen dann zu messen, wenn der erste Parameter diesen Schwellenwert überschritten hat, und dadurch, daß der Bildsensor weiterhin folgendes aufweist:
   einen Schaltkreis (CTH), um eine Umwandlung der Entwicklung des zweiten elektrischen Parameters (HIC) in Abhängigkeit von der Zeit in eine Entwicklung des dritten elektrischen Parameters (IT) in Abhängigkeit von der Zeit vorzunehmen, und
   Mittel für die Ablesung (CL) der momentanen Werte des dritten elektrischen Parameters, welche am Ende des Zyklus in den verschiedenen Zellen aufgezeichnet wurden.

2. Bildsensor nach Anspruch 1, **dadurch gekennzeichnet, daß** das lichtempfindliche Halbleiterelement der Zellen aus einer Photodiode (PD) besteht, und dadurch, daß Mittel (I1) vorgesehen sind, um die Photodioden der verschiedenen Zellen vorzuladen, und daß der erste elektrische Parameter die elektrische Spannung an den Anschlußklemmen der Photodiode darstellt, welche mit Hilfe des Komparators (CMP) mit einer Schwellenspannung (Vs) verglichen wird.

3. Bildsensor nach einem der Ansprüche 1 und 2,

**dadurch gekennzeichnet, daß** der Generator (GC) einen Generator für die Erzeugung von konstantem Strom enthält und die erste gemeinsame Leitung (LB2) an die Generatoren der einzelnen Zellen angeschlossen ist, und daß der zweite elektrische Parameter (HIC) der in der Leitung kumulierte Strom ist.

4. Bildsensor nach einem der Ansprüche 1 bis 3, **dadurch gekennzeichnet, daß** der dritte elektrische Parameter (IT) eine elektrische Spannung darstellt, und daß der Probenehmer einen Kondensator (Cpix) und einen Unterbrecher (I2) aufweist, der von dem Komparator gesteuert wird und geeignet ist, wahlweise die auf der zweiten gemeinsamen Leitung (LB3) vorhandene momentane Spannung auf den Kondensator zu beaufschlagen.

5. Bildsensor nach einem der Ansprüche 1 bis 4, **dadurch gekennzeichnet, daß** der Generator (GC) und der Probenehmer (I2, Cpix) durch den Ausgang des Komparators (CMP) zu leicht unterschiedlichen Zeitpunkten (t, t + Δt) gesteuert werden.

6. Bildsensor nach einem der Ansprüche 1 bis 5, **dadurch gekennzeichnet, daß** die lichtempfindlichen Elemente (Pd), die Komparatoren (CMP), die Generatoren (GC), die Probenehmer (I2,Cpix) und die Ablesemittel (CL) der einzelnen Zellen nach der MOS-Technologie (Metal-Oxyde-Semiconductor) auf einem gemeinsamen Substrat hergestellt sind.

**Claims**

1. Semiconductor-based image sensor, of the type comprising a set of cells (CEL) each 'comprising a photosensitive semiconductor element (PD) capable of generating a first electrical parameter whose value changes monotonically with the amount of light received during a given cycle by the said cell, and

   a comparator means (CMP) able to compare in the course of the cycle the said electrical parameter with a threshold value (Vs) common to all the cells, characterized in that it furthermore comprises, in each cell:
   a generator means (GC) controlled by the output of the comparator means so as to vary a second electrical parameter (HIC) on a first line (LB2) common to all the cells by a predetermined constant value (Ict) when the said first parameter has crossed the said threshold,
   a sampler means (I2, Cpix) also controlled by the output of the said comparator means so as to record in the said cell the instantaneous value of a third electrical parameter (IT) present on a second common line (LB3) substantially when the said first parameter has crossed the said threshold,

and in that the sensor furthermore comprises:

a circuit (CTH) for performing a conversion of the change in the second electrical parameter (HIC) as a function of time into a change in the third electrical parameter (IT) as a function of time, and
means (CL) for reading the instantaneous values of the third electrical parameter which are recorded in the various cells at the end of a cycle.

2. Sensor according to Claim 1, characterized in that the photosensitive semiconductor element of each cell consists of a photodiode (PD), and in that there are provided means (I1) for precharging the photodiodes of the various cells, in that the first electrical parameter is the electric voltage across the terminals of the photodiode, compared by the comparator means (CMP) with a threshold voltage (Vs).

3. Sensor according to either of Claims 1 and 2, characterized in that the generator means (GC) comprises a constant current generator, the said first common line (LB2) being linked to the generators of the various cells and the said second electrical parameter (HIC) being the cumulative current in the line.

4. Sensor according to one of Claims 1 to 3, characterized in that the third parameter (IT) is an electric voltage, and in that the sampler means comprises a capacitor (Cpix) and switch (I2) controlled by the comparator means and able selectively to apply the instantaneous voltage present on the second common line (LB3) to the said capacitor.

5. Sensor according to one of Claims 1 to 4, characterized in that the generator means (GC) and the sampler means (I2, Cpix) are controlled by the output of the comparator means (CMP) at slightly different instants (t, t+$\Delta$t).

6. Sensor according to one of Claims 1 to 5, characterized in that the photosensitive elements (Pd), the comparator means (CMP), the generator means (GC), the sampler means (I2, Cpix) and the means (CL) for reading the various cells are constructed in Metal-Oxide-Semiconductor technology on a common substrate.

# FIG. 1

CBH

$S_n^j$

CEL

CBV

# FIG.2

# FIG.3

*FIG.4*

*FIG.5*